(19) **Europäisches Patentamt**
**European Patent Office**
**Office européen des brevets**

(11) **EP 2 233 886 A1**

(12) **EUROPEAN PATENT APPLICATION**
published in accordance with Art. 153(4) EPC

(43) Date of publication:
**29.09.2010 Bulletin 2010/39**

(51) Int Cl.:
*G01C 21/00* (2006.01)      *G08G 1/0969* (2006.01)
*G09B 29/00* (2006.01)      *G09B 29/10* (2006.01)

(21) Application number: **08865005.6**

(22) Date of filing: **09.12.2008**

(86) International application number:
**PCT/JP2008/072356**

(87) International publication number:
**WO 2009/081728 (02.07.2009 Gazette 2009/27)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.12.2007   JP 2007330802**

(71) Applicant: **Sony Corporation**
**Tokyo 108-0075 (JP)**

(72) Inventors:
- **OHATA, Tadahiro**
  **Tokyo 108-0075 (JP)**
- **TSUTSUI, Masanao**
  **Tokyo 108-0075 (JP)**

(74) Representative: **Thévenet, Jean-Bruno et al**
**Cabinet Beau de Loménie**
**158, rue de l'Université**
**75340 Paris Cédex 07 (FR)**

(54) **ELECTRONIC DEVICE AND NAVIGATION DEVICE**

(57)      A navigation apparatus (0) includes a display unit (6), map display means for displaying a map on the display unit (6), scale setting means for setting the scale of the map displayed on the display unit (6), position information acquisition means (8) for sequentially acquiring position information representing the position of a subject at a predetermined frequency, display point selecting means for selecting a display point suitable for display in accordance with the set scale, from a time series of the sequentially acquired positions, and path display means for plotting the selected display point on the displayed map and displaying a movement path of the subject. The scale setting means determines a movement speed of the subject from the sequentially acquired position information and sets the scale in accordance with the movement speed. A navigation apparatus capable of path display, map display, and other displays adapted to changes in movement speed is provided.

FIG. 1

**Description**

Technical Field

The present invention relates to an electronic apparatus, such as a navigation apparatus suitable for being on a vehicle and the like, and a navigation method.

Background Art

An on-vehicle navigation apparatus receives signals transmitted from GPS (Global Positioning System) satellites to detect the current position of a subject vehicle, and matches the current position of the subject vehicle with a road pattern represented by map data on the basis of information regarding the subject vehicle detected by various sensors and map information held in a storage device of the navigation apparatus to display the current position of the subject vehicle on a map displayed on the display device. In addition, when a destination is set, guidance (navigation) to the destination is performed.

As described above, car navigation systems of the related art are devices that display a movement path of an automobile in real time on a map. A method for displaying the path in such a car navigation system uses a technology called map matching as described above, and the current position and the path are expressed on a map on the basis of position information acquired from GPS satellites by using autonomous travel data acquired from an acceleration sensor and a vehicle speed sensor. A path to be displayed in this case is a line formed by connecting path points, which are updated every certain distance, along a road pattern.

Furthermore, navigation apparatuses are utilized in mobile phones. A man navigation system utilized in a mobile phone performs path display on the display of the mobile phone on the basis of position information acquired from base stations and a GPS receiver embedded in the mobile phone body. This man navigation system also displays a path, as necessary, by using a map matching technology basically in the same way as the car navigation system. Such navigation apparatuses are disclosed in, for example, the following Patent Documents 1 to 4.

A navigation apparatus described in Patent Document 1 (Japanese Unexamined Patent Application Publication No. 2002-148056) utilizes data for map matching composed of nodes disposed at certain intervals along roads on a map and links each connecting two consecutive nodes. After detection that the position of a subject vehicle measured on the basis of signals transmitted from GPS satellites has passed a node, a track point is superimposed and displayed on this node to improve the visibility of the map. However, this display method requires past track data, and therefore does not work for the case where a path is displayed for the first time.

A navigation apparatus described in Patent Document 2 (Japanese Unexamined Patent Application Publication No. 2005-208466) holds track data in accordance with the scale of a map and can perform a track display at high speed. However, since recording a track for each scale of a map requires a large-capacity memory, the cost is increased as the distance of the movement path increases.

In order to enhance the visibility of a map, it is important to set the scale in accordance with the movement speed of a subject vehicle. However, a large amount of resource is required to perform a smooth path display using map matching while changing the scale, causing the cost of the navigation apparatus to increase. This problem needs to be solved.

Patent Document 3 (Japanese Unexamined Patent Application Publication No. 2002-81955) discloses a navigation apparatus equipped with a function that reproduces images which have been shot by video camera or the like during travel, in association with map display. This navigation apparatus loads images having position information and displays the images on a monitor of the navigation apparatus. In this case, the images are displayed on a map with the map as a background. For example, during a trip by a car, various pictures are shot by a digital camera before arriving at a destination. When an image is loaded into the navigation apparatus after position information is added to a picture, the image is appended to a site with which the position information matches.

In Patent Document 4 (Japanese Unexamined Patent Application Publication No. 2006-126954) as an embodiment for a process of displaying a route and image data displayed on a map, a vehicle symbol or the like is displayed on a route along which a vehicle has traveled, the symbol is moved along the route by simulation, and image data is displayed on a display device every time the symbol reaches a shooting point on the map. For a section for which image data is not present, fast-forwarding is performed.

However, in a configuration disclosed in the above-described Patent Document 3 (Japanese Unexamined Patent Application Publication No. 2002-81955) or Patent Document 4 (Japanese Unexamined Patent Application Publication No. 2006-126954), images are simply attached on the map. Thus, it is not clear when the pictures were shot or how the pictures were shot in terms of a time line. Regarding the route simulation (path reproduction), although a time period of viewing the images can be shortened by fast-forwarding sections for which an image is not present, a flow of images cannot be expressed using the actual speed. In particular, it is difficult to meet a need such as a desire to view scenery of visited sites along the time line, as in the case of viewing a trip journal.

Disclosure of Invention

In view of the above-described problems of the related art, an object of the invention is to provide an electronic apparatus such as a navigation apparatus and a navigation method capable of path display, map display, and other image displays adapted to changes in movement speed. In order to achieve the object, the following means are employed. That is, an electronic apparatus according to the present invention is characterized by including a display unit, map display means for displaying a map on the display unit, scale setting means for setting a scale of the map displayed on the display unit, position information acquisition means for sequentially acquiring position information representing a position of a subject, at a predetermined frequency, display point selecting means for selecting a display point suitable for display in accordance with the set scale, from a time series of the sequentially acquired positions, and path display means for plotting the selected display point on the displayed map and displaying a movement path of the subject. The display point selecting means includes first display point selecting means for selecting a first display point from the time series of the sequentially acquired positions, minimum distance setting means for setting a minimum distance limit in accordance with the set scale, distance calculating means for calculating a distance from a position corresponding to the first display point as an origin to successively acquired positions subsequent thereto, and second display point selecting means for selecting a position, as a second display point, corresponding to a case where the successively calculated distance exceeds the set minimum distance limit. The display point selecting means updates the first display point in accordance with the position corresponding to the selected second display point, and further determines a new second display point by using the updated first display point as an origin.

Preferably, the scale setting means determines a movement speed of the subject from the sequentially acquired position information and sets the scale in accordance with the movement speed. In addition, the second display point selecting means performs arithmetic processing on the sequentially acquired position information in real time, and successively selects the second display point. The path display means displays an ongoing movement path on the display unit by using the successively selected second display point. Possibly, position information storage means for storing the sequentially acquired position information is included. The second display point selecting means performs arithmetic processing on the position information read from the position information storage means, and successively selects the second display point. The path display means displays a past movement path as a movement track on the display unit on the basis of the successively selected second display point. Preferably, the second display point selecting means, in a case where a distance to one position calculated from the origin exceeds a maximum distance limit that has been set in advance, excludes the one position from selection targets. Also, the second display point selecting means sets an estimated permissible limit in accordance with the movement speed of the subject determined from the sequentially acquired position information, calculates a two-point distance between one position acquired and an immediately preceding position, and excludes the one position from selection targets if the two-point distance is out of the estimated permissible limit. Also, the map display means adjusts a display scrolling speed for the map on the display unit in accordance with the movement speed of the subject determined from the sequentially acquired position information, and thereby prevents a progression of the movement path appearing on the map from going out of a screen of the display unit. Also, image data acquisition means for acquiring image data, and image display means for displaying the acquired image data on the display unit are included. The image data acquired by the image data acquisition means includes data regarding a moving image shot during travel, data representing a shooting position of the moving image, and data representing a shooting time of the moving image. The image display means supplies, to the display unit, the data regarding the moving image of a corresponding shooting position in accordance with a progression of the second display point, and displays, with the map as a background, the moving image thereon. The path display means synchronizes, in accordance with the data regarding the shooting time, the progression of the movement path with a progression of the moving image display.

Additionally, an electronic apparatus according to the present invention is characterized by including a display unit, map display means for displaying a map on the display unit, scale setting means for setting a scale of the map displayed on the display unit, position information acquisition means for sequentially acquiring position information representing a position of a subject, at a predetermined frequency, display point selecting means for selecting a display point suitable for display in accordance with the set scale, from a time series of the sequentially acquired positions, and path display means for plotting the selected display point on the displayed map and displaying a movement path of the subject. The map display means adjusts a display scrolling speed for the map on the display unit in accordance with a movement speed of the subject determined from the sequentially acquired position information, and thereby prevents a progression of the movement path appearing on the map from going out of a screen of the display unit.

Additionally, an electronic apparatus according to the present invention is characterized by including a display unit, map display means for displaying a map on the display unit, scale setting means for setting a scale of the map displayed on the display unit, position information acquisition means for sequentially acquiring position information representing a position of a subject, at a predetermined frequency, display point selecting means for selecting a display point suitable for display in accordance with the set scale, from a time series of the sequentially acquired positions, path display means for plotting the selected display point on the displayed map and displaying a movement path of the subject, image data acquisition means for acquiring image data, and image display means for displaying the acquired image data on the display unit. The image data acquired by the image data acquisition means includes data regarding a moving image shot during movement, data representing a shooting position of the moving image, and data representing a shooting time of the moving image. The image display means supplies, to the display unit, the data regarding the moving image of a corresponding shooting position in accordance with a progression of the display point, and thereby displays, with the map as a background, the moving image thereon. The path display means synchronizes, in accordance with the data regarding the shooting time, the progression of the movement path with a progression of the moving image display.

Brief Description of Drawings

[Fig. 1] Fig. 1 is a block diagram illustrating an overall configuration of a navigation apparatus according to the present invention.
[Fig. 2] Fig. 2 is a schematic diagram illustrating a basic concept of the present invention.
[Fig. 3] Fig. 3 is a flowchart used along with an explanation of an operation of the navigation apparatus illustrated in Fig. 1.
[Fig. 4] Fig. 4 is also a flowchart used along with the explanation of the operation.
[Fig. 5] Fig. 5 is also a flowchart used along with the explanation of the operation.
[Fig. 6] Fig. 6 is schematic diagram illustrating a method for calculating a two-point distance.
[Fig. 7] Fig. 7 is a schematic block diagram illustrating additional functions of the navigation apparatus according to the present invention.
[Fig. 8] Fig. 8 is a flowchart used along with an explanation of an operation of the navigation apparatus according to the present invention.
[Fig. 9] Fig. 9 is also a screen example used along with the explanation of the operation.
[Fig. 10] Fig. 10 is also a screen example used along with the explanation of the operation.
[Fig. 11] Fig. 11 is also a screen example used along with the explanation of the operation.
[Fig. 12] Fig. 12 is a flowchart used along with an explanation of an operation of the navigation apparatus according to the present invention.
[Fig. 13] Fig. 13 is also a screen example used along with the explanation of the operation.
[Fig. 14] Fig. 14 is a flowchart used along with an explanation of an operation of the navigation apparatus according to the present invention.
[Fig. 15] Fig. 15 is also a flowchart used along with the explanation of the operation.

Best Modes for Carrying Out the Invention

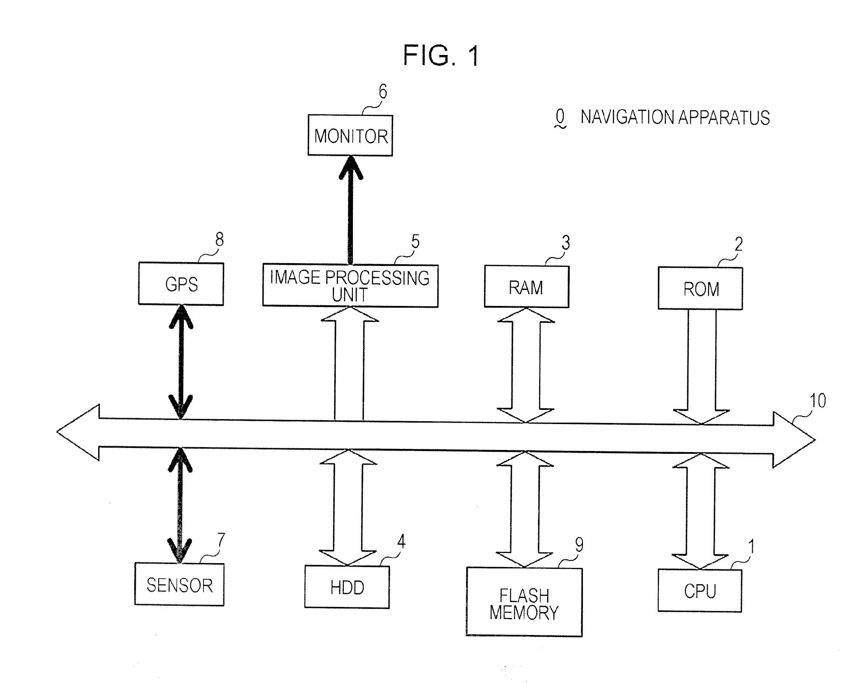

In the following, embodiments of the present invention will be described in detail with reference to figures. Fig. 1 is a block diagram illustrating an overall configuration of a navigation apparatus (path display apparatus) according to the present invention. As illustrated in the figure, a navigation apparatus 0 according to the present invention is configured to include a CPU 1, a ROM 2, a RAM 3, an HDD 4, an image processing unit 5, a monitor 6, a sensor 7, a GPS device 8, a flash memory 9, a bus 10, and so on.

Here, the CPU (central processing unit) 1 performs various arithmetic processing in accordance with programs stored in the HDD (hard disk drive) 4 or the ROM 2, and controls each unit of the present navigation apparatus.

The ROM 2 is a semiconductor storage device in which the programs to be executed by the CPU 1 are stored. The RAM 3 is a semiconductor storage device into which the programs to be executed by the CPU 1 are temporarily loaded.

The HDD 4 can store the programs to be executed by the CPU 1, and stores map information to be displayed on the monitor 6. In some cases, image data such as moving images and still images is stored therein. The image processing unit 5 performs rendering processing corresponding to a rendering command supplied from the CPU 1, and converts an image obtained as a result of the rendering processing into a picture signal (video signal) to output the picture signal to the monitor 6. The monitor 6 is formed of, for example, an LCD (liquid crystal display), and is a display unit (display device) for displaying the picture signal output from the image processing unit 5.

The sensor 7 includes a vehicle speed sensor indicating the speed of a vehicle, an angular speed sensor indicating the angular speed of a vehicle along each control axis, an emergency brake sensor indicating the operation status of an emergency brake, and the like. The GPS device 8 is a device that processes information transmitted from multiple GPS satellites to acquire the current position (latitude, longitude, and altitude) of a vehicle on which the present navigation apparatus is mounted. The flash memory 9 is a memory that stores various information sequentially acquired from the sensor 7 and the GPS device 8. The bus 10 connects the above-described various units and devices to one another to configure the present navigation apparatus.

The navigation apparatus according to the present invention basically includes a display unit, map display means, scale setting means, position information acquisition means, display point selecting means, and path display means. The display unit is configured to include the image processing unit 5 and the monitor 6. The map display means, the scale setting means, the display point selecting means, and the path display means are functionally configured by programs executed by the CPU 1. In addition, the position information acquisition means is configured to include the GPS device 8.

In this configuration, the map display means displays a map on the display unit (6). The scale setting means sets the scale of the map displayed on the display unit (6). The position information acquisition means (8) sequentially acquires position information representing the position of a subject at a predetermined frequency. The display point selecting means (1) selects a display point suitable for display in accordance with the set scale, from a time series of the sequentially acquired positions. The path display means (1) plots the selected display point on the displayed map and displays the movement path of the subject.

As a feature of the present invention, the display point selecting means (1) includes first display point selecting means, minimum distance setting means, distance calculating means, and second display point selecting means. The first display point selecting means selects a first display point from the time series of the sequentially acquired positions. The minimum distance setting means sets a minimum distance limit Lmin in accordance with the set scale. The distance calculating means calculates a distance D from the position corresponding to the first display point as the origin to successively acquired positions subsequent thereto. The second display point selecting means selects a position, as a second display point, corresponding to a case where the successively calculated distance D exceeds the set minimum distance limit Lmin. With this configuration, the present display point selecting means (1) updates the first display point in accordance with the position corresponding to the selected second display point, and determines a new second display point using the updated first display point as the origin.

According to a specific configuration, the scale setting means determines a movement speed of the subject from the sequentially acquired position information, and sets the scale in accordance with the movement speed. Specifically, the scale is set so as to be larger as the movement speed becomes faster.

According to one aspect, the second display point selecting means performs arithmetic processing on the sequentially acquired position information in actual time (real time), and successively selects the second display point. In response to this, the path display means displays the ongoing movement path in real time on the display unit (6) by using the successively selected second display point. According to another aspect, the present navigation apparatus includes position information storage means (9) for storing the sequentially acquired position information. Correspondingly, the second display point selecting means performs arithmetic processing on the position information read from the position information storage means (9), and successively selects the second display point. Furthermore, the path display means can reproduce and display a past movement path as a movement track on the display unit (6) on the basis of the successively selected second display point.

According to a specific algorithm for path display, the second display point selecting means, in the case where the distance D to one position calculated from the origin exceeds a maximum distance limit Lmax that has been set in advance, excludes the one position from selection targets, thereby preventing incorrect display from being performed. In addition, the second display point selecting means sets an estimated permissible limit in accordance with the movement speed of the subject determined from the sequentially acquired position information, calculates a two-point distance d between one position acquired and the immediately preceding position, and excludes the one position from selection targets if the two-point distance d is out of the estimated permissible limit. In this manner, the second display point selecting means excludes position information which exceeds a permissible error from selection targets to remove noise from the path display.

According to a preferred embodiment of the present navigation apparatus, the map display means adjusts a display scrolling speed for the map on the display unit (6) in accordance with the movement speed the subject determined from the sequentially acquired position information, and thereby prevents the progression of the movement path appearing on the map from going out of the screen of the display unit (6). By adaptively adjusting the display scrolling speed for the map in accordance with the movement speed, the current location display on the map can be placed at the center of the screen as much as possible, thereby enhancing the visibility.

In an advanced embodiment, the present navigator apparatus includes image data acquisition means for acquiring image data, and image display means for displaying the acquired image data on the display unit (6). The image data acquired by the image data acquisition means is stored in, for example, the HDD 4, and contains data regarding a moving image shot during movement, data representing the shooting position of the moving image, and data representing the shooting time of the moving image. The shooting position data can be acquired from, for example, the GPS device 8, and can be written into a corresponding frame of the moving image data. In this advanced embodiment, the image display means supplies, to the display unit (6), the data regarding the moving image of a corresponding shooting position in accordance with the progression of the second display point, and displays, with the map as a background, the moving image thereon. Meanwhile, the path display means synchronizes, in accordance with the data regarding shooting time, the progression of the movement path with the progression of the moving image display. By performing time matching between the moving image display and the path display, the product value of the present navigation apparatus can be increased.

Note that the navigation apparatus illustrated in Fig. 1 is basically structured by a general-purpose computer including tha CPU 1, the ROM 2, the RAM 3, the HDD 4, and so on, and realizes the functions the navigation apparatus by executing predetermined navigation programs. However, the present invention is not limited to this configuration, and a dedicated navigation apparatus may be structured by assembling dedicated component parts. Note that in the present embodiment, an LCD is used as the monitor 6, but the monitor 6 is not limited to this. The monitor 6 is just a picture display device, and may be of any type such as an LCD or a CRT. Furthermore, although in the present embodiment, the GPS device 8 is used as means that acquires position information, the present invention is not limited to this. Recently, in addition to GPS devices, positioning means that utilize base stations for mobile phone and positioning means that utilize wireless LAN environments are available. A device that represents these means is denoted as GPS in the present application. In addition, the sensor 7 may include various sensors such as a gyroscope determining autonomous travel and sensors for vehicle speed pulse or the like, and the position information can be acquired by these sensors.

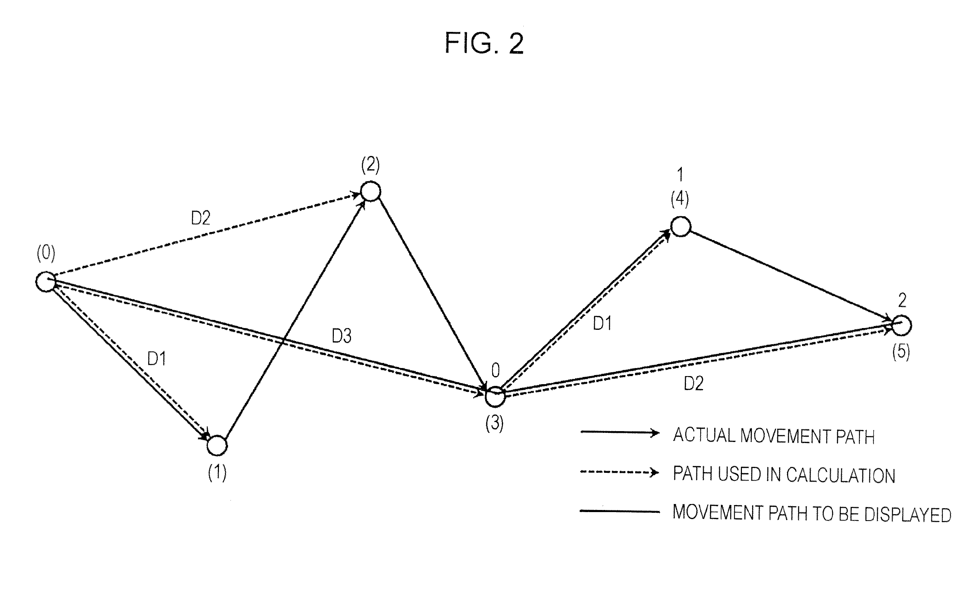

Fig. 2 is a schematic diagram illustrating an example of a path display algorithm executed by the navigation apparatus according to the present invention illustrated in Fig. 1. In this schematic diagram, a positioning start point is denoted as (0), and (1), (2), (3), (4), and (5) are given in the order of positioning. That is, (0) to (5) indicate the time series of sequentially acquired positions. A distance from the position (0) as the origin to each position is denoted as D. Furthermore, a distance between two points adjacent to each other is denoted as d. The subscript k added to D and d is a count indicating the order of the positions in the time series. As illustrated in the figure, according to position information actually acquired, the position of the subject moves from (0) to (1) and then (2). However, if path display is performed by connecting the movement points (0), (1), and (2) each time the position moves, points indicating the path fill a map, making the map difficult to read in some cases including a case where a subject vehicle is stopping and so on. Therefore, the present invention can perform excellent path display or track display in accordance with the map scale by executing the above-described path display algorithm adapted to the movement speed (or the scale corresponding thereto).

In the example illustrated in the figure, a distance D3 from the origin (0) to the third point (3) is a distance that exceeds the minimum distance limit Lmin, which has been set in advance in accordance with the scale. Therefore, as a path display point after (0), (3) is selected and actually displayed on the map. In this example, the first display point is (0) and the second display point is (3) while skipping (1) and (2). The second display point (3) selected in this way is used as the origin of the next path display. That is, the first display point is updated in accordance with the position corresponding to the selected second display point (3), and further by using the updated first display point (3) as the origin, a new second display point (5) is determined. That is, with (3) as the origin, a distance D1 to the next point (4) is shorter than the Lmin and a distance D2 to the point (5) after that exceeds the Lmin for the first time. Accordingly, with (3) as the first display point (origin), the second display point to be selected next is (5). Thus, in this example, positioning points (display points) utilized in the path display are (0), (3), and (5). Note that the maximum distance limit Lmax is used to exclude individual positioning information that is an abnormal value. In the example illustrate in the figure, it is considered that all the positioning points do not exceed the Lmax. Adopting the algorithm, which adaptively selects display points in accordance with the scale, in this manner makes the screen, on which the movement path is displayed, easy to view without making the screen busy. In addition, also in the case where the movement track is displayed, this makes the screen easy to view without making the screen busy.

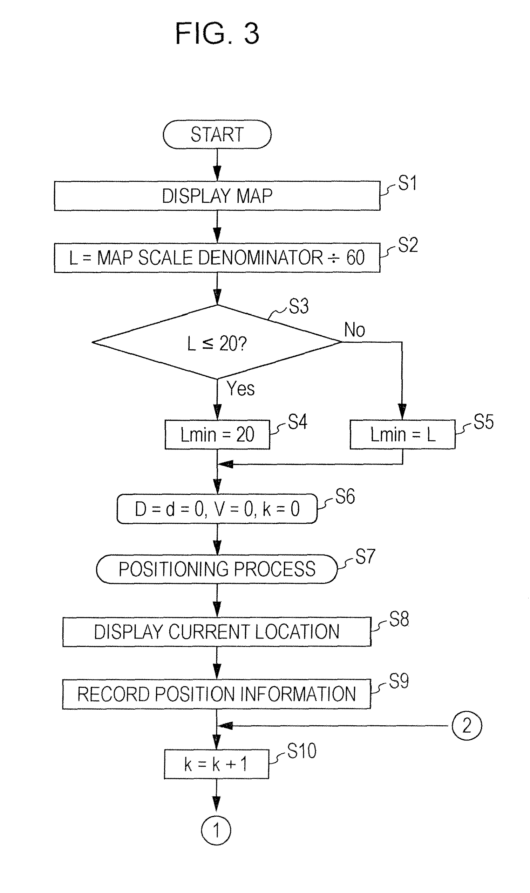

Next, with reference to the flowcharts in Figs. 3 to 5, the path display algorithm according to the present invention is specifically explained. First, as illustrated in the flowchart of Fig. 3, after the path display algorithm is started by activating a path display program, map display is performed on the monitor in step S1. At this time, the scale of the map is set to, for example, a default value. After this, the scale setting means determines the movement speed of the subject from the sequentially acquired position information and sets the scale in accordance with the movement speed as needed.

Next, in step S2, a parameter L is defined as an index for path points used in the path display. The parameter L is a value that is determined by using a denominator of the map scale. The parameter L is expressed in "m/pixel" in a digital map, and thus defined in accordance with the resolution of the monitor as needed.

Next, in step S3, it is determined whether the index L is smaller than 20 (m) or not. In the case where the index L is smaller than 20, Lmin=20 is set in step S4. On the other hand, in the case where the index L exceeds 20, Lmin=L is set in step S5. In this manner, the minimum distance limit Lmin is determined in steps S3 to S5. This parameter Lmin defines the lower limit of a distance parameter for rendering an easy-to-view path on the map. As illustrated in the flowchart, in the case where the index L is a value of 20 or less, the Lmin is rounded up to 20. The base of this value is based on the positioning accuracy of GPS. The current GPS positioning accuracy is about ±10 m in a fixed point observation. The value of 20 is derived from this GPS positioning accuracy and thus varies depending on the positioning means. The present embodiment uses GPS as a representative example, whereby the distance is set to 20 m. However in an actual embodiment, the distance is set in accordance with the positioning means.

Next, in step S6, variables D, d, V, and k to be used in the present path display algorithm are initialized. The D represents a distance to each positioning point measured from the origin, the d represents a distance between two points adjacent to each other, the V represents a movement speed, and the k represents a count value. As described above, the k represents the ordinal number of positioning points counted from the origin.

The flow proceeds to step S7 to initiate a positioning process by using positioning means such as GPS. To be specific, the latitude Lat(0) and the longitude Lon(0) of the current location, and the speed V(0) and the like are acquired from GPS positioning means. Note that in the case of track display that reproduces and displays a past path, since path data is already available, the path data can be acquired from the storage device in accordance with the display algorithm.

The flow proceeds to step S8 to display the map on the monitor in accordance with the current location after current location information is acquired from the positioning means such as GPS. The flow further proceeds to step S9 to sequentially store the acquired position information in the memory. Information to be acquired from GPS includes a movement speed, which includes latitude, longitude and altitude, and a DOP value, which is an index for positioning accuracy. In the present system, at least data necessary for the path display algorithm is recorded every second.

In the following step S10, the variable k is counted up every time the poison is measured. The variable k is reset to zero when a positioning point is selected as a path point and is displayed. As described above, the variable k is a counter variable of the positioning point.

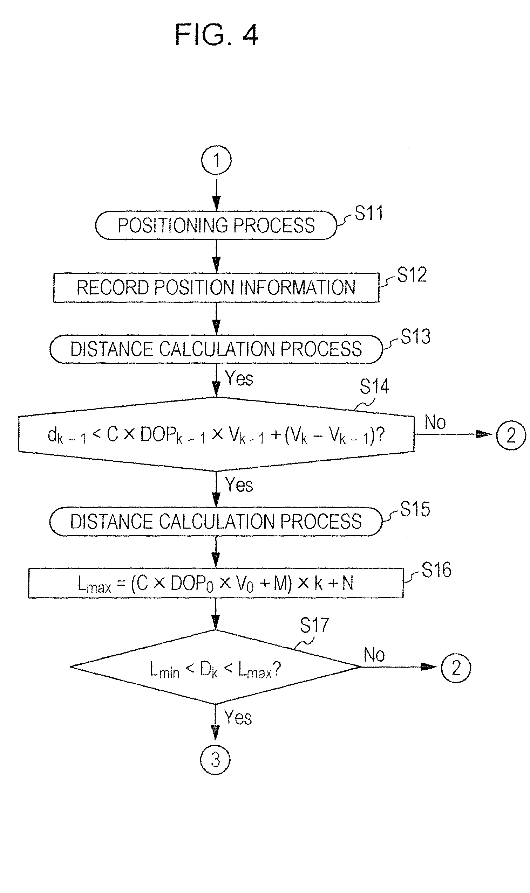

Next, as illustrated in the flowchart of Fig. 4, a subsequent positioning process is performed in step S11 and corresponding position information is recorded in step S12.

In this way, when information of two or more positioning points is acquired, a distance calculating process is performed in step S13 to determine the distance d between the consecutive two points.

Next in step S14, the validity of the calculated two-point distance $d_{k-1}$ is evaluated. As illustrated in the figure, the present embodiment utilizes a DOP value in a formula for this validity evaluation. A coefficient C in the formula given in step S14 is a coefficient for weighting the positioning accuracy, and is set in accordance with the performance of a GPS module used in the system. For example, in a high-performance GPS module, the positioning accuracy may be on the order of a few millimeters. In this case, a value smaller than one is set. On the other hand, in the case of a position accuracy of plus or minus several tens of meters, a value larger than one is set.

In the case where the validity of the positioning point is denied in step S14, the flow returns to step S10 of Fig. 3, and the counter variable k is incremented. On the other hand, in the case where the validity of the two-point distance $d_{k-1}$ is confirmed in step S14, the flow proceeds to the next step S15 to perform a distance calculating process. In this distance calculating process, a two-point distance $D_k$ from the base point of the path display point to the current location is determined.

Next, in step S16, the maximum distance limit Lmax is defined. This parameter Lmax is the upper limit of the distance parameter for rendering an easy-to-view path on the map. The formula for determining the upper limit Lmax is given in step S16 in the flowchart of Fig. 4. A constant M in this calculation formula is a coefficient for weighting corresponding to the speed during travel. Setting the constant M to ten is typically sufficient, or, for walking, setting the constant M to even zero is allowed. On the other hand, a constant N is a reject coefficient for the case where error positioning occurs consecutively, and setting the constant N to 340 is typically sufficient. Note that this number, 340, means 340 m/second in the case where positioning is performed at intervals of one second, representing the speed of sound. Typically, it is not considered that vehicles move at a speed faster than the speed of sound, and thus setting to N=340 is sufficient in practical application. In addition, as in the first term, $C \times DOP_k \times V_k + N$ may be used in this term in order to reflect the positioning accuracy and positioning.

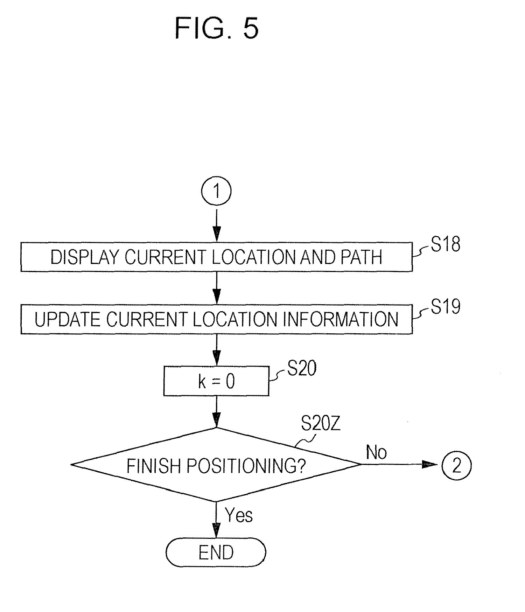

Next, the flow proceeds to step S17, and it is determined whether the distance $D_k$ from the origin of the path display is a distance suitable for the path display. If the distance $D_k$ is longer than the Lmin but shorter than the Lmax, the flow proceeds to step S18 in the flowchart of Fig. 5. On the other hand, if the distance $D_k$ does not satisfy the determination condition indicated in step S17, the flow returns to step S10 in the flowchart of Fig. 3 and the counter coefficient k is incremented by one. In this case, positioning continues without updating the display point.

In step S18 in the flowchart of Fig. 5, the current location is selected as a display point and displayed on the map. The flow further proceeds to step S19 to update the current location information. Further, in step S20, the counter coefficient k is reset to zero. After this, the flow proceeds to step S20Z to determine whether to finish the positioning or not. If the positioning is finished, the present path display algorithm is terminated. If the positioning is not finished, the flow returns to step S10 of Fig. 3 and continues the accession.

Note that, although these are not described in the flowcharts of Figs. 3 to 5, the current location is displayed whenever the position information is updated, and in the case where the scale of the map is changed, recalculation is performed, at a point in time, for the current location including the track obtained so far from the beginning of the flowchart, and display is performed.

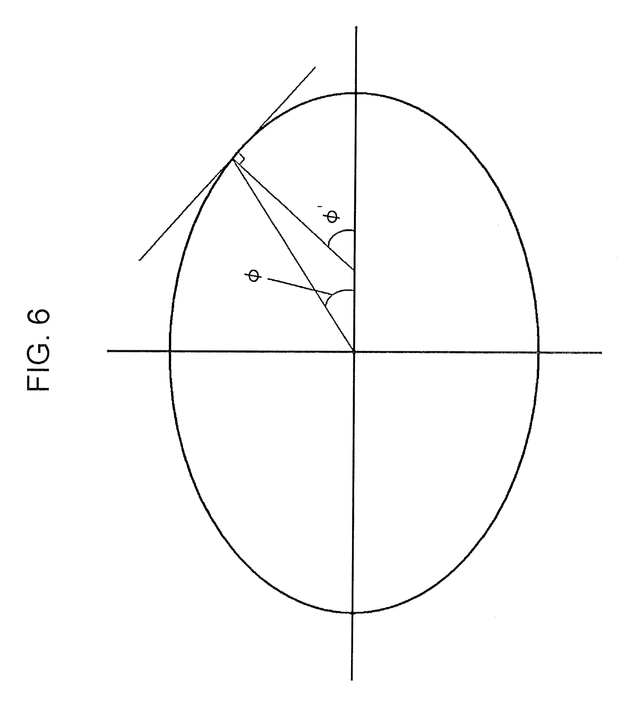

Fig. 6 is a schematic diagram illustrating a specific example of a two-point distance calculation process executed in step S13 in the flowchart of Fig. 4. First, a latitude φ'A of a site A and a longitude λA thereof are read from the map. In addition, a latitude φ'B of a site B and a longitude λB thereof are read from the map. In this case, the φ'A and the φ'B are geographic latitudes. These are converted into geocentric latitudes. With the geocentric latitude of the site A indicated as φA and the geocentric latitude of the site B indicated as φB, the conversion methods are as follows.

$$\phi A = \phi'A - 11.55'\sin(2 \times \phi'A)$$

$$\phi B = \phi'B - 11.55'\sin(2 \times \phi'B)$$

In this case, from the following calculation with a formula of spherical trigonometry, cosΔ is determined and further the value for Δ (rad.) is determined.

$$\cos\Delta = \cos\phi A\cos\phi B\cos(\lambda A - \lambda B) + \sin\phi A\sin\phi B$$

Finally, the distance between the two sites A and B can be determined as 6369 (km) × Δ.

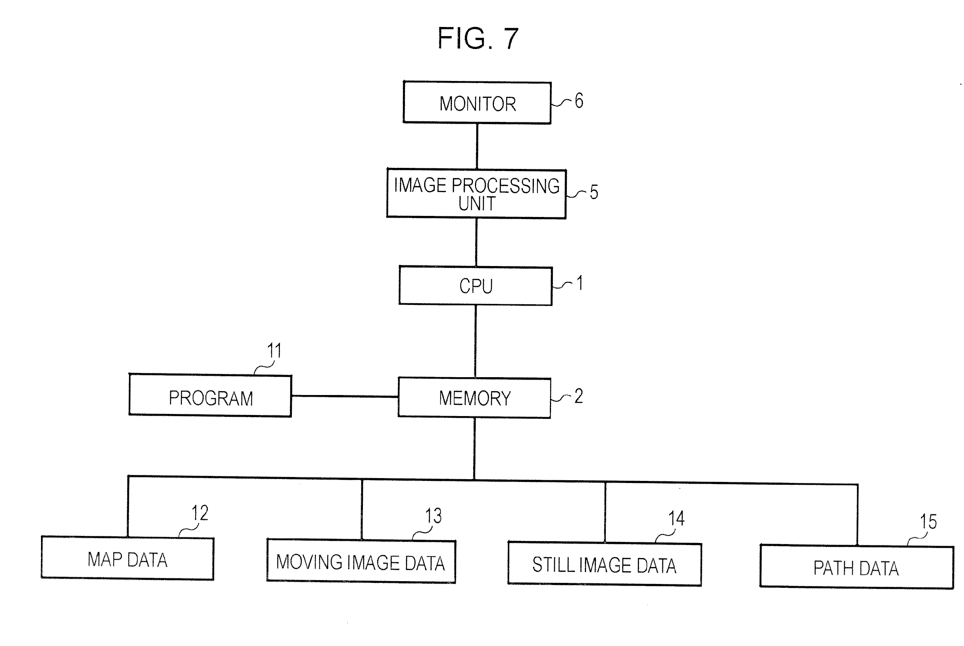

The navigation apparatus illustrated in Fig. 1 has, in addition to the function of displaying the movement path and movement track on the map, a function of displaying still images and moving images such as scenery shot during movement on the same monitor. Fig. 7 is a schematic block diagram illustrating a subsystem configuration of sections realizing the image display function, in particular. As illustrated in the figure, this subsystem is configured to include a hardware section and a software section. The hardware section includes the CPU 1, the memory 2, the image processing unit 5, the monitor 6, and so on. This hardware section is included in the hardware section of the navigation system of Fig. 1.

Meanwhile, the software section includes a program 11 for image display, map data 12, moving image data 13, still image data 14, and path data 15. These software components are stored in advance in the HDD 4, the flash memory 9, or the ROM 2 illustrated in Fig. 1. The program 11 is loaded in the memory (RAM) 2, and then executed by the CPU 1 to display an image on the monitor 6 via the image processing unit 5. In this case, the map data 12, the moving image data 13, the still image data 14, the path data 15 and the like stored in the HDD 4 and the like are loaded into the memory 2 as needed, and processed into desired image data to display the monitor 6. Accordingly, with the present navigation apparatus, a map and images can be viewed on the monitor at the same time.

The moving image data 13 and the still image data 14 were shot by a video camera or the like during movement, and are loaded into the HDD in advance via an interface of the navigation apparatus. The video camera is of a type capable of shooting a still image as well as a normal moving image, and data of either image has a predetermined frame configuration. Data regarding shooting time and information regarding shooting position are written into a frame. Note that a user may set the position information independently on a map, and in this case the position information regarding a site specified on the map is tentatively set as a portion of image data. In addition, the path data 15 may be acquired by handling position information regarding an actual movement as continuous data, or may be route information acquired by setting a start point (current location) and an end point (destination) as in a car navigation system. Or the path data 15 may be a track that is created by the user by writing independently on the map.

The system illustrated in Fig. 7 configures the image data acquisition means and the image display means by causing the CPU 1 to execute the program 11. The image data acquisition means and the image display means are introduced as additional functions to the ordinary navigation function realized in the navigation apparatus illustrated in Fig. 1. The image data acquisition means acquires the moving image data 13 and the still image data 14. The image display means displays the acquired image data 13 and 14 on the display unit 6. The image data acquired by the image data acquisition means includes data regarding the moving image 13 shot during movement, data representing the shooting position of the moving image, and data representing the shooting time of the moving image. The image display means supplies, to the image processing unit 5, the data regarding the moving image of a corresponding shooting position in accordance with the progression of the display points representing the movement path shown on the monitor 6, and displays, with the map as a background, the moving image thereon. Meanwhile, the path display means incorporated in the present navigation apparatus synchronizes, in accordance with the data regarding the shooting time, the progression of the movement path with the progression of the moving image display. By performing time matching between the progression of the moving image display and the progression of the movement path in this way, the scenery of visited sites can be viewed along the time line as in the case of viewing a trip journal.

The system illustrated in Fig. 7 introduces an additional function to the map display means of the navigation apparatus by executing the application program 11 by using the CPU 1. That is, the map display means of the present navigation apparatus adjusts the display scrolling speed for the map on the display unit 6 in accordance with the movement speed of the subject determined from the sequentially acquired position information, and thereby prevents the progression of the movement path appearing on the map from going out of the screen of the display unit 6. Therefore, even when the scale is switched due to a movement speed change, the current position is automatically set at the center of the screen at any time, whereby the usability is improved.

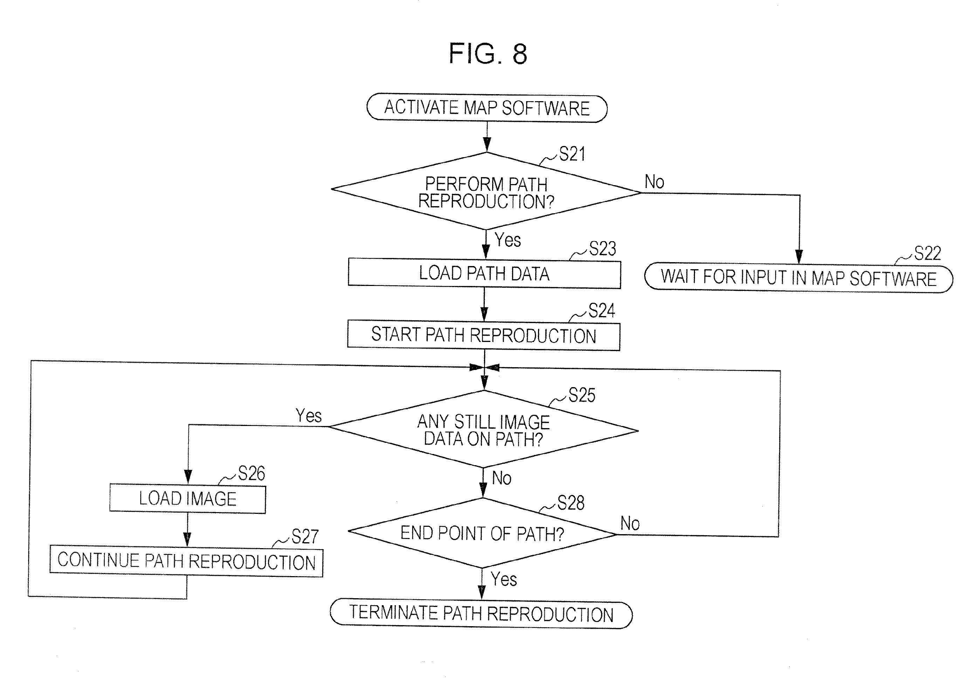

The application program 11 illustrated in Fug. 7 is provided as, for example, a portion of map software. Fig. 8 is a flowchart relating to path reproduction implemented in this map software. This map software can search a route and create a trip plan, and also can be used for navigation in conjunction with a GPS unit. Here, regarding a path reproduction algorithm of the present map software, an explanation is given in accordance with the flowchart of Fig. 8.

First, after the map software is activated, it is determined whether path reproduction is performed or not in step S21. If this determination is negative (NO), the map software waits for input in step S22. On the other hand, if the determination in step S21 is positive (YES), the flow proceeds to step S23 to load path data. That is, in accordance with an operation performed by a user, a path (track/route) is loaded onto the map.

The flow proceeds to step S24. When the user performs an operation for starting the path reproduction, a display point icon (e.g., arrow mark) moves along a path from the start point to the end point. In the following step S25, it is determined whether still image data is linked to the progressing path. If the determination result is positive, the flow proceeds to step S26, and a corresponding still image is loaded and displayed on the map. At this time, the still image may be opened in another window instead of being directly displayed on the map. In this way, on the map as a background, the still image linked to the path is displayed on the monitor 6.

After a predetermined display time period has elapsed, the flow proceeds to step 527 to close the display of the still image and continue the path reproduction.

On the other hand, if the determination is negative (NO) in step 525, the flow proceeds to step 528 to determine whether or not the path has reached the end point. In the case where the path has reached the end point, the path reproduction is terminated and the map software is closed. On the other hand, in the case where the path has not reached the end point, the flow returns to step S25 and it is sequentially determined whether the next still image data is present on the path.

As is apparent from the description above, in step S25 of the path reproduction algorithm, it is sequentially determined whether the still image data is linked to the path along with the progression of the icon (e.g., arrow mark). As described above, position data has been written in each still image. By sequentially referring to this position data and the position data of the icon on the map, the still images linked to the path can be read and displayed on the monitor in chronological order along with the progression of the path reproduction.

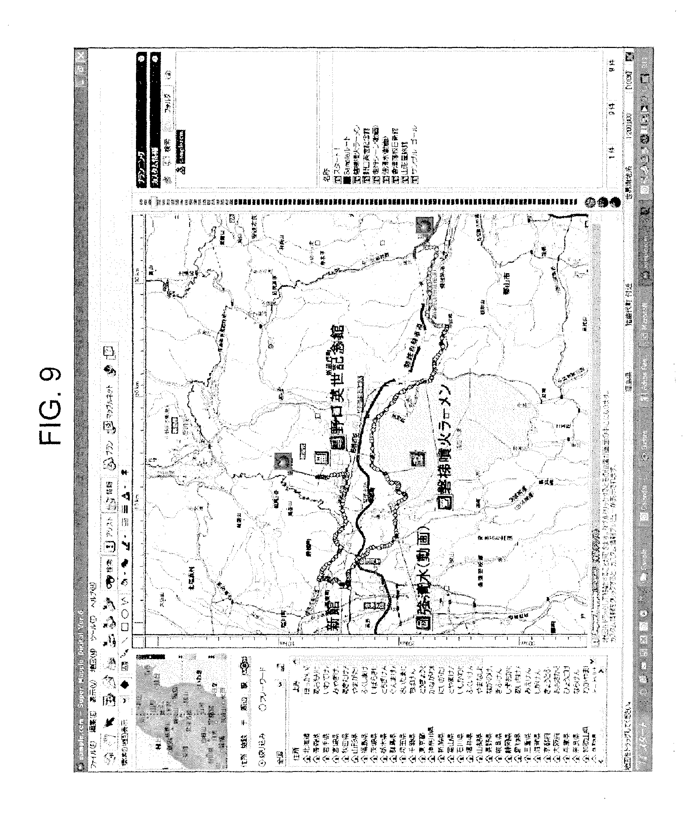

Fig. 9 is an example of a path reproduction start screen. This path reproduction start screen is displayed on the monitor by executing step S23 of the algorithm illustrated in Fig. 8.

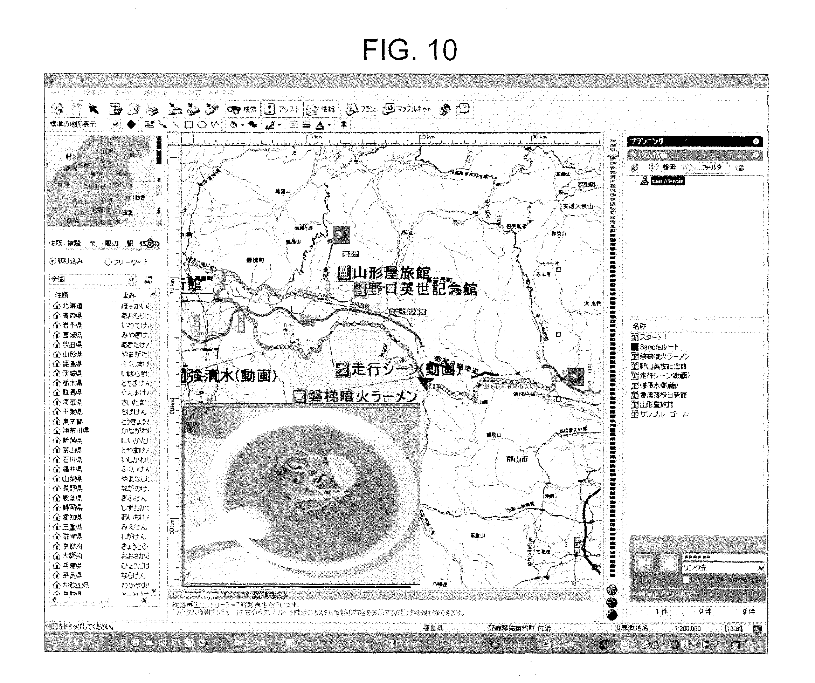

Fig. 10 is an example of a still image displayed on the map. This still image is displayed on the monitor by executing step S26 of the algorithm illustrated in Fig. 8. In the example of Fig. 10, the still image is displayed while being attached to the map. When the arrow mark indicating the progression of the path reaches a certain position, a still image shot at this position is read out and displayed on the monitor as illustrated in the figure.

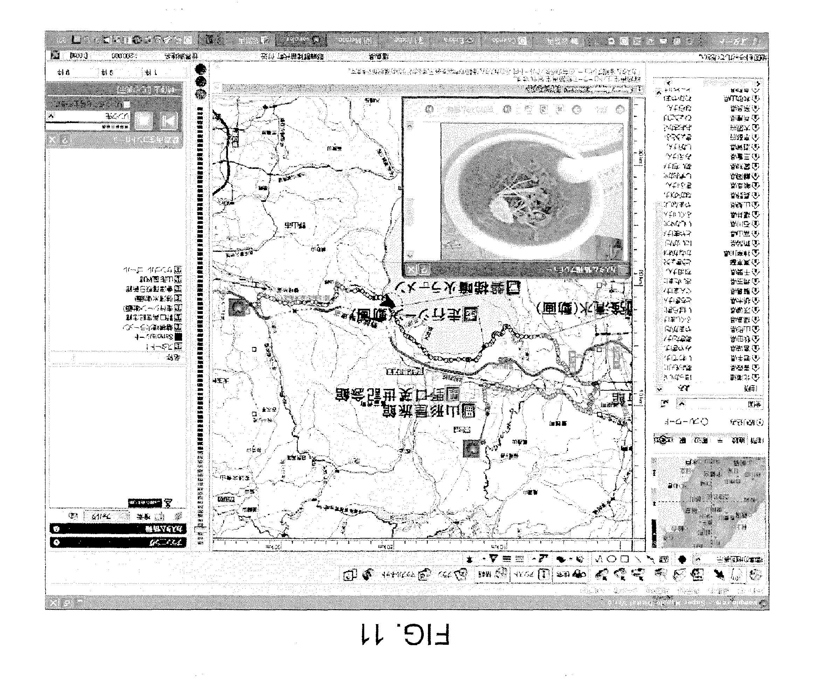

Fig. 11 is another mode for displaying a still image. In the case of Fig. 10, a still image is displayed while being attached to the background map. On the other hand, in the case of Fig. 11, while a window other than the background window displaying the map is opened, a still image is displayed thereon.

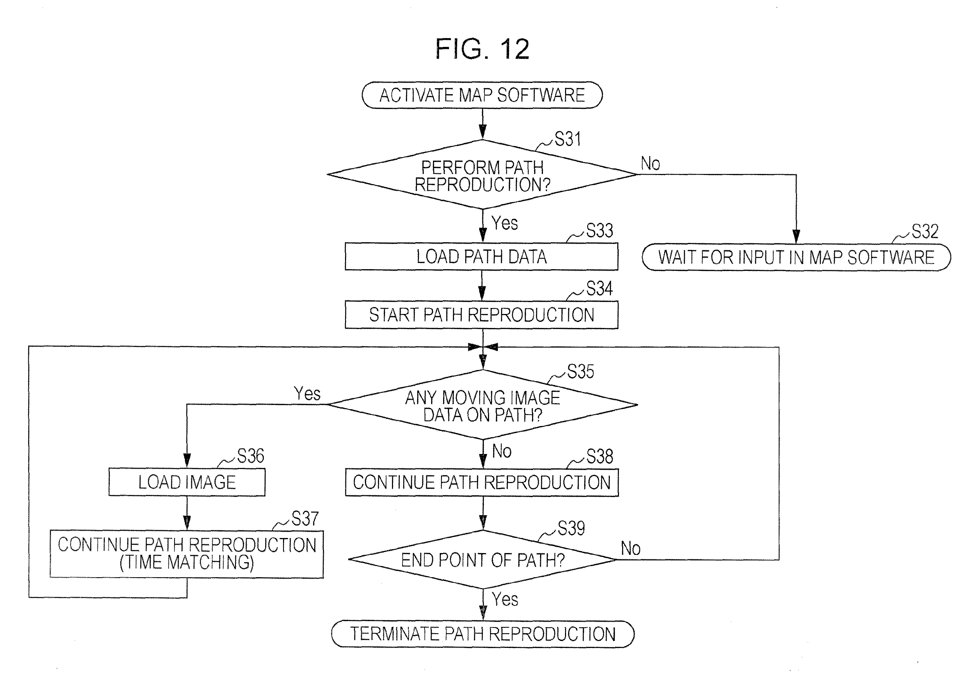

Fig. 12 is a flowchart illustrating another example of a path reproduction algorithm to be executed by the map software. The above described flowchart illustrated in Fig. 8 represents an algorithm for still image reproduction, whereas the present flowchart represents an algorithm for moving image reproduction. The moving image reproduction algorithm is basically similar to the still image reproduction algorithm, and both algorithms can be combined and executed together.

After the map software is activated, path reproduction is started from step S31 to step S34 in the same way as the still image reproduction algorithm. In the following step S35, it is determined whether or not there is moving image data on the path. If the determination result in step S35 is positive (YES), the flow proceeds to step S36 to load the moving image. The flow further proceeds to step S37 to continue the path reproduction. By performing time matching at that time, the time progression of the moving image display and the progression of the icon indicating the path are synchronized. Since the icon (e.g., arrow mark) is moved forward by performing time matching every time a picture corresponding to position information is loaded, a reproduction can be sequentially performed in accordance with the position information recorded in a moving image picture. Therefore, a picture shot during travel can be reproduced in conjunction with the progression of the icon on the map. With map software of the related art, a picture which has been continuously shot during travel can be reproduced only at a shooting start point. Upon the completion of the moving image reproduction, the flow returns to step S35 from step S37.

On the other hand, if the determination result in step S35 is negative (NO), the flow proceeds to step S38 to continue a normal path reproduction. That is, the icon is moved forward along the path at a predetermined speed. Since the speed at this time is not needed to be synchronized with the reproduction speed at which moving images are reproduced, a default motion speed is adopted. Then, the flow proceeds to step S39 to determine whether or not the icon has reached the end point of the path. If the determination result is positive, the path reproduction is terminated and the map software is terminated. On the other hand, if the determination result is negative, the flow returns to step S35 to continue the path reproduction process.

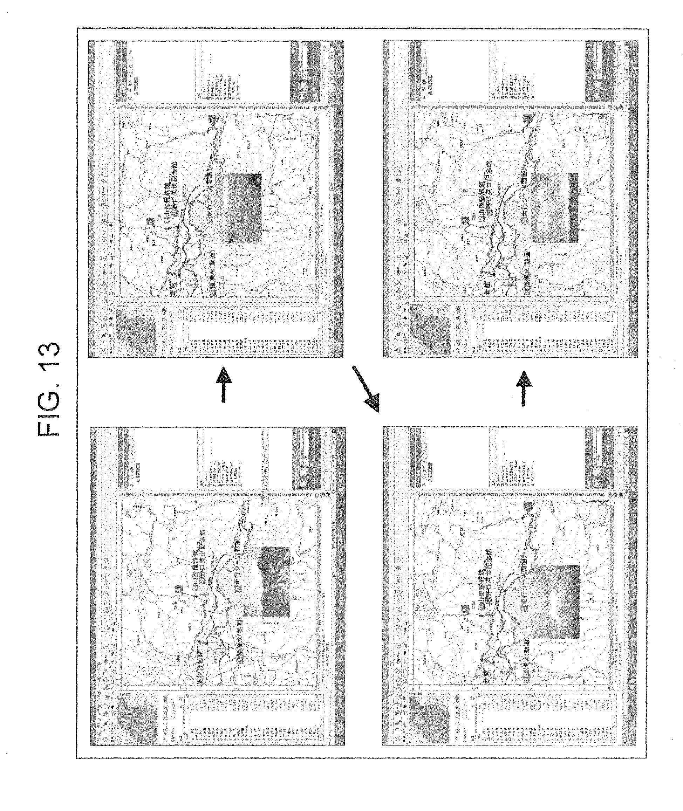

Fig. 13 represents an example of a moving image reproduction screen. As illustrated in the figure, the pictures which have been shot during travel are reproduced in conjunction with the map. It is possible to experience a sense of speed in a trip journal by executing such map software. It is possible to view a map screen in conjunction with moving images. It is possible to experience experiences recorded in the trip journal along a chronological axis.

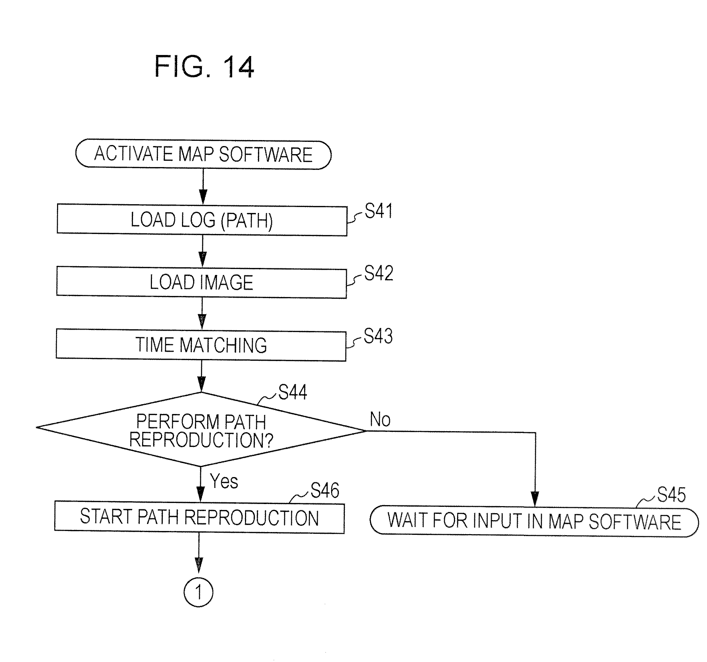

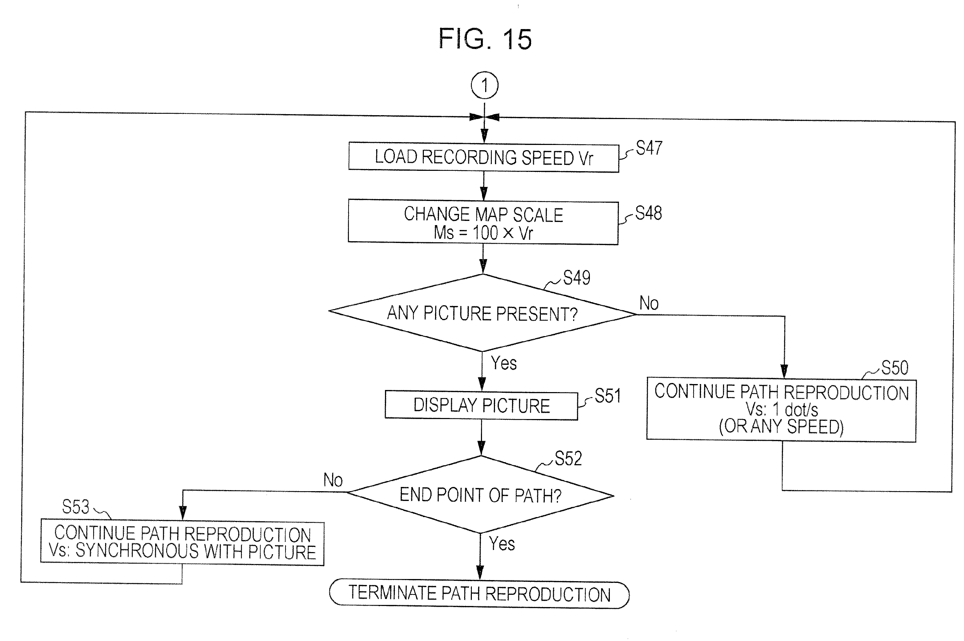

Figs. 14 and 15 are flowcharts representing an advanced embodiment of the above-described map software. This advanced embodiment is **characterized in that** the scrolling speed for a map and the scale of a map are changed in accordance with the movement speed (recording speed) at a time of shooting a moving image. After the map software is activated, a log (position information) to be displayed is loaded on the map in step S41 of Fig. 14. In the following step S42, an image to which position information is to be added is loaded. This image may be a still image or a moving image.

In the following step S43, time matching between the log (path) and the image is performed. Position information is added to a picture in association with the log on the basis of the shooting time of the image. For example, in the case where a still image is in JPEG format, position information compliant with the Exif standard is recorded. In addition, in the case where a moving image is in DV format, position information compliant with the Green Book is recorded. For other formats, in the case where an area in which position information is to be recorded is predefined in a standard, position information is recorded in accordance with the standard. owever, with a DVD standard for which an area in which position information is to be recorded is not defined, a free area is used to work with the map software.

Next, the flow proceeds to step S44 to determine whether or not path reproduction is performed. If the determination result is negative, the flow branches to step S45 to wait for input at the map software side. On the other hand, if the determination result in step S44 is positive (YES), the flow proceeds to step S46 to start path reproduction. When the path reproduction is performed, a path reproduction function of the map software is used.

In the path reproduction function, a recording speed Vr is first loaded in step S47 of Fig. 15. Next, the flow proceeds to step S48 to change the map scale. That is, on the basis of the speed information Vr recorded in the log, a map scale Ms is determined. In the present example, with the recording speed Vr (km/h), map display is performed with the map scale Ms being set to Ms = 100 $\times$ Vr. In this way, the map scale Ms is increased as the recording speed Vr increases.

Next, the flow proceeds to step S49 to determine whether or not there is a picture that matches the first position information in the path reproduction. If this determination is negative (NO), the flow branches to step S50 to perform the path reproduction at a scroll speed Vs that a user has set in advance. In the present example, this scroll speed is set to Vs = 1 (dot/s). In the case where still images are displayed, pictures will be successively displayed at the default scroll speed Vs.

On the other hand, if it is determined that there is a moving image picture in step S49, the flow proceeds to step S51 to execute a display of the moving image picture. The flow further proceeds to step S52 to determine whether or not the end point of the path has been reached. In the case where the end point of the path has been reached, the path reproduction is terminated. On the other hand, in the case where the end point of the path has not been reached, the path reproduction continues in step S53. In the case where a moving image picture is displayed, map scrolling is performed on the basis of the information that has been subjected to time matching. That is, in the path reproduction in step S53, map scrolling is performed along the flow of the moving images to which position information (speed information) has been added. That is, the scroll speed Vs during display of the moving image pictures is synchronized with the progression speed for the moving image pictures.

Note that, depending on circumstances, a display of the path progression may be skipped for sections for which a picture is not present. In the case where path reproduction is performed by using a large number of pictures, it takes a considerable amount of time to perform the display. Thus, for a path for which a picture is not present, the path reproduction may be skipped in accordance with an instruction of a user.

As is apparent from the descriptions above, in the advanced embodiment illustrated in Figs. 14 and 15, the map scroll speed is changed in accordance with the recording speed. In addition, the scale of the map is changed in accordance with the recording speed. This enables a reproduction of the map along the time flow. Furthermore, by performing time matching, multiple pictures and a log can be handled as one file. The speed for sections that are not synchronized with a picture can be set as needed. In addition, it is possible to skip sections for which a picture is not present.

The electronic apparatus according to a first aspect of the present invention includes the scale setting means for setting the scale of a map set on the display unit, and the display point selecting means for selecting a display point suitable for display in accordance with this set scale. The scale setting means sets a large scale for the case with a large movement speed or a small scale for the case with a small movement speed to enhance the visibility of the map. On the other hand, the display point selecting means automatically adjusts the interval of display points to be selected in accordance with the scale. The size of a path display acquired by plotting selected display points is set in accordance with the scale to enhance the visibility of the path display. In the above-described manner, the electronic apparatus according to the first aspect of the present invention automatically adjusts a plot interval of the display points in accordance with the movement speed, and thereby realizes the path display adapted to the movement speed.

The electronic apparatus according to a second aspect of the present invention adjusts the display scroll speed for a map on the display unit in accordance with the movement speed of the subject determined from sequentially acquired position information. This keeps the progression of the movement path appearing on the map at the center of the screen of the display unit. In the above-described manner, the electronic apparatus according to the second aspect of the present invention automatically adjusts the display scroll speed by adapting to a changing movement speed, and thereby improves the visibility of the map and the visibility of the path display.

The electronic apparatus according to a third aspect of the present invention can also display a moving image, which has been shot during movement, with the map as background on a display screen constructing the display unit. In this case, the progression of the movement path is synchronized with the progression of the moving image display in accordance with the shot time data written in the frames of the moving image. In the above-described manner, the electronic apparatus according to the third aspect of the present invention performs time matching between the moving image display and the path display to increase the product value of the electronic apparatus. Performing time matching between the moving image display and the path display in this way causes the path display to be performed in accordance with the movement speed, whereby the path display adapted to a changing movement speed can be realized.

**Claims**

1.    An electronic apparatus **characterized by** comprising:

a display unit;
map display means for displaying a map on the display unit;
scale setting means for setting a scale of the map displayed on the display unit;
position information acquisition means for sequentially acquiring position information representing a position of a subject, at a predetermined frequency;
display point selecting means for selecting a display point suitable for display in accordance with the set scale, from a time series of the sequentially acquired positions; and
path display means for plotting the selected display point on the displayed map and displaying a movement path of the subject,
wherein the display point selecting means includes
first display point selecting means for selecting a first display point from the time series of the sequentially acquired positions,
minimum distance setting means for setting a minimum distance limit in accordance with the set scale,
distance calculating means for calculating a distance from a position corresponding to the first display point as an origin to successively acquired positions subsequent thereto, and
second display point selecting means for selecting a position, as a second display point, corresponding to a case where the successively calculated distance exceeds the set minimum distance limit, and
wherein the display point selecting means updates the first display point in accordance with the position corresponding to the selected second display point, and further determines a new second display point by using the updated first display point as an origin.

2.    The electronic apparatus according to claim 1, **characterized in that**
the scale setting means determines a movement speed of the subject from the sequentially acquired position information and sets the scale in accordance with the movement speed.

3.    The electronic apparatus according to claim 1, **characterized in that**
the second display point selecting means performs arithmetic processing on the sequentially acquired position information in real time, and successively selects the second display point, and
the path display means displays an ongoing movement path on the display unit by using the successively selected second display point.

4.    The electronic apparatus according to claim 1, **characterized by** further comprising
position information storage means for storing the sequentially acquired position information,
wherein the second display point selecting means performs arithmetic processing on the position information read from the position information storage means, and successively selects the second display point, and
wherein the path display means displays a past movement path as a movement track on the display unit on the basis of the successively selected second display point.

5. The electronic apparatus according to claim 1, **characterized in that**
the second display point selecting means, in a case where a distance to one position calculated from the origin exceeds a maximum distance limit that has been set in advance, excludes the one position from selection targets.

6. The electronic apparatus according to claim 1, **characterized in that**
the second display point selecting means sets an estimated permissible limit in accordance with the movement speed of the subject determined from the sequentially acquired position information, calculates a two-point distance between one position acquired and an immediately preceding position, and excludes the one position from selection targets if the two-point distance is out of the estimated permissible limit.

7. The electronic apparatus according to claim 1, **characterized in that**
the map display means adjusts a display scrolling speed for the map on the display unit in accordance with the movement speed of the subject determined from the sequentially acquired position information, and thereby prevents a progression of the movement path appearing on the map from going out of a screen of the display unit.

8. The electronic apparatus according to claim 1, **characterized by** further comprising:

   image data acquisition means for acquiring image data; and
   image display means for displaying the acquired image data on the display unit,
   wherein the image data acquired by the image data acquisition means includes data regarding a moving image shot during movement, data representing a shooting position of the moving image, and data representing a shooting time of the moving image,
   wherein the image display means supplies, to the display unit, the data regarding the moving image of a corresponding shooting position in accordance with a progression of the second display point, and displays, with the map as a background, the moving image thereon, and
   wherein the path display means synchronizes, in accordance with the data regarding the shooting time, the progression of the movement path with a progression of the moving image display.

9. An electronic apparatus **characterized by** comprising:

   a display unit;
   map display means for displaying a map on the display unit;
   scale setting means for setting a scale of the map displayed on the display unit;
   position information acquisition means for sequentially acquiring position information representing a position of a subject, at a predetermined frequency;
   display point selecting means for selecting a display point suitable for display in accordance with the set scale, from a time series of the sequentially acquired positions; and
   path display means for plotting the selected display point on the displayed map and displaying a movement path of the subject,
   wherein the scale setting means determines a movement speed of the subject from the sequentially acquired position information and sets the scale in accordance with the movement speed.

10. An electronic apparatus **characterized by** comprising:

   a display unit;
   map display means for displaying a map on the display unit;
   scale setting means for setting a scale of the map displayed on the display unit;
   position information acquisition means for sequentially acquiring position information representing a position of a subject, at a predetermined frequency;
   display point selecting means for selecting a display point suitable for display in accordance with the set scale, from a time series of the sequentially acquired positions; and
   path display means for plotting the selected display point on the displayed map and displaying a movement path of the subject,
   wherein the map display means adjusts a display scrolling speed for the map on the display unit in accordance with a movement speed of the subject determined from the sequentially acquired position information, and thereby prevents a progression of the movement path appearing on the map from going out of a screen of the display unit.

**11.** An electronic apparatus **characterized by** comprising:

a display unit;
map display means for displaying a map on the display unit;
scale setting means for setting a scale of the map displayed on the display unit;
position information acquisition means for sequentially acquiring position information representing a position of a subject, at a predetermined frequency;
display point selecting means for selecting a display point suitable for display in accordance with the set scale, from a time series of the sequentially acquired positions;
path display means for plotting the selected display point on the displayed map and displaying a movement path of the subject;
image data acquisition means for acquiring image data; and
image display means for displaying the acquired image data on the display unit,
wherein the image data acquired by the image data acquisition means includes data regarding a moving image shot during movement, data representing a shooting position of the moving image, and data representing a shooting time of the moving image,
wherein the image display means supplies, to the display unit, the data regarding the moving image of a corresponding shooting position in accordance with a progression of the display point, and thereby displays, with the map as a background, the moving image thereon, and
wherein the path display means synchronizes, in accordance with the data regarding the shooting time, the progression of the movement path with a progression of the moving image display.

**12.** A navigation method **characterized by** comprising:

a map display step of displaying a map on a display panel;
a scale setting step of setting a scale of the map displayed on the display panel;
a position information acquisition step of sequentially acquiring position information representing a position of a subject, at a predetermined frequency;
a display point selecting step of selecting a display point suitable for display in accordance with the set scale, from a time series of the sequentially acquired positions; and
a path display step of plotting the selected display point on the displayed map and displaying a movement path of the subject,
wherein the display point selecting step includes
a first display point selecting step of selecting a first display point from the time series of the sequentially acquired positions,
a minimum distance setting step of setting a minimum distance limit in accordance with the set scale,
a distance calculating step of calculating a distance from a position corresponding to the first display point as an origin to successively acquired positions subsequent thereto, and
a second display point selecting step of selecting a position, as a second display point, corresponding to a case where the successively calculated distance exceeds the set minimum distance limit, and
wherein the display point selecting step updates the first display point in accordance with the position corresponding to the selected second display point, and further determines a new second display point by using the updated first display point as an origin.

**13.** A navigation method **characterized by** comprising:

a map display step of displaying a map on a display panel;
a scale setting step of setting a scale of the map displayed on the display panel;
a position information acquisition step of sequentially acquiring position information representing a position of a subject, at a predetermined frequency;
a display point selecting step of selecting a display point suitable for display in accordance with the set scale, from a time series of the sequentially acquired positions; and
a path display step of plotting the selected display point on the displayed map and displaying a movement path of the subject,

wherein the scale setting step determines a movement speed of the subject from the sequentially acquired position information and sets the scale in accordance with the movement speed.

**14.** A navigation method **characterized by** comprising:

a map display step of displaying a map on a display panel;

a scale setting step of setting a scale of the map displayed on the display panel;

a position information acquisition step of sequentially acquiring position information representing a position of a subject, at a predetermined frequency;

a display point selecting step of selecting a display point suitable for display in accordance with the set scale, from a time series of the sequentially acquired positions; and

a path display step of plotting the selected display point on the displayed map and displaying a movement path of the subject,

wherein the map display step adjusts a display scrolling speed for the map on the display panel in accordance with a movement speed of the subject determined from the sequentially acquired position information, and thereby prevents a progression of the movement path appearing on the map from going out of a screen of the display panel.

**15.** A navigation method **characterized by** comprising:

a map display step of displaying a map on a display panel;

a scale setting step of setting a scale of the map displayed on the display panel;

a position information acquisition step of sequentially acquiring position information representing a position of a subject, at a predetermined frequency;

a display point selecting step of selecting a display point suitable for display in accordance with the set scale, from a time series of the sequentially acquired positions;

a path display step of plotting the selected display point on the displayed map and displaying a movement path of the subject;

an image data acquisition step of acquiring image data including data regarding a moving image shot during movement, data representing a shooting position of the moving image, and data representing a shooting time of the moving image; and

an image display step of displaying the moving image included in the acquired image data on the display panel, wherein the image display step supplies, to the display panel, the data regarding the moving image of a corresponding shooting position in accordance with a progression of the display point, and thereby displays, with the map as a background, the moving image thereon, and

wherein the path display step synchronizes, in accordance with the data regarding the shooting time included in the image data, the progression of the movement path with a progression of the moving image display.

EP 2 233 886 A1

# FIG. 1

0 NAVIGATION APPARATUS

FIG. 2

EP 2 233 886 A1

→ ACTUAL MOVEMENT PATH

⇢ PATH USED IN CALCULATION

— MOVEMENT PATH TO BE DISPLAYED

# FIG. 3

```
              START

              DISPLAY MAP                          S1

    L = MAP SCALE DENOMINATOR ÷ 60                 S2

                    S3
              L ≤ 20?          No

         Yes

      Lmin = 20    S4        Lmin = L    S5

        D = d = 0, V = 0, k = 0           S6

         POSITIONING PROCESS              S7

       DISPLAY CURRENT LOCATION           S8

     RECORD POSITION INFORMATION          S9

                                     (2)

            k = k + 1    S10

              (1)
```

# FIG. 4

$$d_{k-1} < C \times DOP_{k-1} \times V_{k-1} + (V_k - V_{k-1})?$$

$$L_{max} = (C \times DOP_0 \times V_0 + M) \times k + N$$

$$L_{min} < D_k < L_{max}?$$

# FIG. 5

① 

DISPLAY CURRENT LOCATION AND PATH — S18

UPDATE CURRENT LOCATION INFORMATION — S19

k = 0 — S20

S20Z

FINISH POSITIONING? — No → ②

Yes

END

FIG. 6

## FIG. 7

MONITOR — 6

IMAGE PROCESSING UNIT — 5

CPU — 1

PROGRAM — 11

MEMORY — 2

MAP DATA — 12

MOVING IMAGE DATA — 13

STILL IMAGE DATA — 14

PATH DATA — 15

EP 2 233 886 A1

## FIG. 8

```
        ┌─────────────────────────┐
        │  ACTIVATE MAP SOFTWARE  │
        └─────────────────────────┘
                     │
                     ▼                        ~S21
              ╱──────────────╲
             ╱  PERFORM PATH   ╲         No
            ╱   REPRODUCTION?   ╲──────────────────┐
             ╲                 ╱                   │
              ╲──────────────╱                     │
                     │ Yes                         ▼
                     ▼              ~S23    ┌──────────────────────────────┐
        ┌─────────────────────────┐  ~S22 │ WAIT FOR INPUT IN MAP SOFTWARE│
        │     LOAD PATH DATA       │       └──────────────────────────────┘
        └─────────────────────────┘
                     │              ~S24
                     ▼
        ┌─────────────────────────┐
        │  START PATH REPRODUCTION │
        └─────────────────────────┘
                     │
                     ▼                        ~S25
              ╱──────────────╲
       Yes   ╱ ANY STILL IMAGE ╲
     ┌──────╱  DATA ON PATH?    ╲
     │       ╲                 ╱
     │        ╲──────────────╱
     │              │ No
     ▼  ~S26        ▼                    ~S28
 ┌──────────┐  ╱──────────────╲      No
 │LOAD IMAGE│ ╱ END POINT OF PATH?╲──────────
 └──────────┘  ╲                 ╱
     │          ╲──────────────╱
     ▼  ~S27           │ Yes
 ┌─────────────────────┐    ▼
 │CONTINUE PATH        │  ┌──────────────────────────┐
 │REPRODUCTION         │  │ TERMINATE PATH REPRODUCTION│
 └─────────────────────┘  └──────────────────────────┘
```

EP 2 233 886 A1

FIG. 9

FIG. 10

## FIG. 11

# FIG. 12

$( ACTIVATE MAP SOFTWARE )$

~S31

⟨ PERFORM PATH REPRODUCTION? ⟩ —No→ ( WAIT FOR INPUT IN MAP SOFTWARE ) ~S32

Yes

~S33
| LOAD PATH DATA |

~S34
| START PATH REPRODUCTION |

~S35
⟨ ANY MOVING IMAGE DATA ON PATH? ⟩

Yes →

~S36
| LOAD IMAGE |

~S37
| CONTINUE PATH REPRODUCTION (TIME MATCHING) |

No ↓

~S38
| CONTINUE PATH REPRODUCTION |

~S39
⟨ END POINT OF PATH? ⟩ —No

Yes

( TERMINATE PATH REPRODUCTION )

EP 2 233 886 A1

FIG. 13

# FIG. 14

```
┌─────────────────────────────────┐
│     ACTIVATE MAP SOFTWARE       │
└─────────────────────────────────┘
                │
                ▼
┌─────────────────────────────────┐  S41
│        LOAD LOG (PATH)          │
└─────────────────────────────────┘
                │
                ▼
┌─────────────────────────────────┐  S42
│          LOAD IMAGE             │
└─────────────────────────────────┘
                │
                ▼
┌─────────────────────────────────┐  S43
│         TIME MATCHING           │
└─────────────────────────────────┘
                │
                ▼
              S44
        ╱───────────╲            No
       ╱ PERFORM PATH ╲──────────────────┐
       ╲ REPRODUCTION? ╱                  │
        ╲───────────╱                     │
                │ Yes                      ▼
              S46                        S45
┌─────────────────────────┐   ┌──────────────────────────────┐
│  START PATH REPRODUCTION │   │ WAIT FOR INPUT IN MAP SOFTWARE│
└─────────────────────────┘   └──────────────────────────────┘
                │
                ▼
              ( 1 )
```

EP 2 233 886 A1

# FIG. 15

Flowchart:

① →

**LOAD RECORDING SPEED Vr** — S47

↓

**CHANGE MAP SCALE**
$Ms = 100 \times Vr$ — S48

↓

**ANY PICTURE PRESENT?** — S49

No → **CONTINUE PATH REPRODUCTION**
Vs: 1 dot/s
(OR ANY SPEED) — S50

Yes ↓

**DISPLAY PICTURE** — S51

↓

**END POINT OF PATH?** — S52

No → **CONTINUE PATH REPRODUCTION**
Vs: SYNCHRONOUS WITH PICTURE — S53

Yes ↓

**TERMINATE PATH REPRODUCTION**

## INTERNATIONAL SEARCH REPORT

International application No.

PCT/JP2008/072356

A. CLASSIFICATION OF SUBJECT MATTER
*G01C21/00*(2006.01)i, *G08G1/0969*(2006.01)i, *G09B29/00*(2006.01)i, *G09B29/10* (2006.01)i

According to International Patent Classification (IPC) or to both national classification and IPC

B. FIELDS SEARCHED

Minimum documentation searched (classification system followed by classification symbols)
G01C21/00-21/36, G01C23/00-25/00, G09B29/00-29/14, G08G1/00-99/00

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 9-061178 A  (Matsushita Electric Works, Ltd.), 07 March, 1997 (07.03.97), Par. Nos. [0021], [0057], [0058] (Family: none) | 1-15 |
| Y | JP 4-289414 A  (Pioneer Corp.), 14 October, 1992 (14.10.92), Par. Nos. [0002] to [0004], [0014] to [0019], [0031] to [0038]; Figs. 2, 3 & US 5363306 A        & EP 504638 A2 & DE 69206857 C | 1-15 |
| Y | JP 2001-272238 A  (Aisin AW Co., Ltd.), 05 October, 2001 (05.10.01), Par. Nos. [0020], [0027] (Family: none) | 1-15 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
05 March, 2009 (05.03.09)

Date of mailing of the international search report
17 March, 2009 (17.03.09)

Name and mailing address of the ISA/
Japanese Patent Office

Authorized officer

Facsimile No.

Telephone No.

Form PCT/ISA/210 (second sheet) (April 2007)

**INTERNATIONAL SEARCH REPORT**

| | International application No. |
|---|---|
| | PCT/JP2008/072356 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 57-73497 A (Honda Motor Co., Ltd.), 08 May, 1982 (08.05.82), Page 3, upper left column, line 8 to page 4, upper left column, line 9 & GB 2089037 A & DE 3142580 A & FR 2492970 A1 | 1-15 |
| Y | JP 10-222062 A (Matsushita Electric Industrial Co., Ltd.), 21 August, 1998 (21.08.98), Claim 1; Par. Nos. [0015] to [0026] (Family: none) | 2,9,13 |
| Y | JP 2001-74488 A (Matsushita Electric Industrial Co., Ltd.), 23 March, 2001 (23.03.01), Claim 4; Par. No. [0018]; Figs. 5, 7 (Family: none) | 2,9,13 |
| Y | JP 3-39779 A (Pioneer Corp.), 20 February, 1991 (20.02.91), Page 3, upper left column, line 4 to page 4, lower left column, line 16 (Family: none) | 4 |
| Y | JP 6-258088 A (Maspro Denkoh Corp.), 16 September, 1994 (16.09.94), Par. Nos. [0014] to [0029] (Family: none) | 4 |
| Y | JP 2007-155493 A (Sharp Corp.), 21 June, 2007 (21.06.07), Par. Nos. [0030] to [0055] (Family: none) | 5 |
| Y | JP 2006-138835 A (Alpine Electronics, Inc.), 01 June, 2006 (01.06.06), Par. Nos. [0030] to [0033], [0038] to [0046]; Fig. 2, 3, 6 & US 2007/0239347 A1 & EP 1647806 A2 & CN 1760692 A | 6 |
| Y | JP 2003-214884 A (Fujitsu Ltd.), 30 July, 2003 (30.07.03), Par. Nos. [0031] to [0033] (Family: none) | 7,10,14 |
| Y | JP 2005-37491 A (Soichi NOMURA), 10 February, 2005 (10.02.05), Claim 1; Par. Nos. [0018], [0028] to [0030]; Fig. 3 (Family: none) | 8,11,15 |

Form PCT/ISA/210 (continuation of second sheet) (April 2007)

**INTERNATIONAL SEARCH REPORT**

| | International application No. |
|---|---|
| | PCT/JP2008/072356 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-208466 A  (Kenwood Corp.),<br>04 August, 2005 (04.08.05),<br>Par. Nos. [0034] to [0088]; Figs. 3, 4, 8<br>(Family: none) | 1-15 |

Form PCT/ISA/210 (continuation of second sheet) (April 2007)

## INTERNATIONAL SEARCH REPORT

| | |
|---|---|
| | International application No. |
| | PCT/JP2008/072356 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The technical feature common to the inventions of claims 1-8, 12, the inventions of claims 9, 13, the inventions of claims 10, 14, and the inventions of claims 11, 15 relates to that a display point is selected from the time series of the positions acquired with a predetermined frequency, in accordance with the set contraction scale and the selected display point is plotted to display a motion path.

    (Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the
☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| **INTERNATIONAL SEARCH REPORT** | International application No. |
|---|---|
| | PCT/JP2008/072356 |

Continuation of Box No.III of continuation of first sheet(2)

However, the technical feature is disclosed in JP 2001-272238 A (Aisin AW Co., Ltd.), 05 October, 2001 (05.10.01), [0020], [0027] (family: none) and JP 57-73497 A (Honda Motor Co., Ltd.), 08 May, 1982 (08.05.82), page 3, upper left column, line 8 to page 4, upper left column, line 9 & GB 2089037 A & DE 3142580 A & FR 2492970 A1.

Accordingly, the common technical feature cannot be a special technical feature. The inventions of claims 1-8, 12, the inventions of claims 9, 13, the inventions of claims 10, 14, and the inventions of claims 11, 15 do not satisfy the requirement of unity of invention.

Form PCT/ISA/210 (extra sheet) (April 2007)

**EP 2 233 886 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002148056 A
- JP 2005208466 A
- JP 2002081955 A
- JP 2006126954 A